(19) Europäisches Patentamt
European Patent Office
Office européen des brevets

(11) **EP 4 244 592 B1**

(12) **EUROPEAN PATENT SPECIFICATION**

(45) Date of publication and mention
of the grant of the patent:
**28.08.2024   Bulletin 2024/35**

(21) Application number: **21794874.4**

(22) Date of filing: **05.11.2021**

(51) International Patent Classification (IPC):
**G01M 11/02** (2006.01)     **G02C 7/02** (2006.01)

(52) Cooperative Patent Classification (CPC):
**G01M 11/0228;** G02C 7/02; G02C 7/04

(86) International application number:
**PCT/EP2021/079470**

(87) International publication number:
**WO 2022/100987 (19.05.2022 Gazette 2022/20)**

(54) **METHOD, DEVICE, COMPUTER PROGRAM AND SYSTEM FOR CONVERSION OF A MEASUREMENT OF AN OPHTHALMIC LENS**

VERFAHREN, VORRICHTUNG, COMPUTERPROGRAMM UND SYSTEM ZUR UMWANDLUNG EINER MESSUNG EINER OPHTHALMISCHEN LINSE

PROCÉDÉ, DISPOSITIF, PROGRAMME INFORMATIQUE ET SYSTÈME DE CONVERSION D'UNE MESURE D'UNE LENTILLE OPHTALMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2020   EP 20207868**

(43) Date of publication of application:
**20.09.2023   Bulletin 2023/38**

(73) Proprietor: **Lambda-X Ophthalmics**
**1400 Nivelles (BE)**

(72) Inventors:
• **BOUSSEMAERE, Luc**
**1428 Lillois-Witterzée (BE)**
• **ANTOINE, Philippe**
**1457 Walhain (BE)**
• **BOUWENS, Arno**
**1050 Bruxelles (BE)**

• **JOANNES, Luc**
**5030 Gembloux (BE)**

(74) Representative: **Calysta NV**
**Lambroekstraat 5a**
**1831 Diegem (BE)**

(56) References cited:
EP-A1- 1 507 135          EP-A2- 0 994 336
DE-A1- 102016 209 720     US-A1- 2016 054 195

• KIM SEONGHUI ET AL: "Merit function regression method for efficient alignment control of two-mirror optical systems", OPTICS EXPRESS, vol. 15, no. 8, 1 January 2007 (2007-01-01), US, pages 5059, XP055881208, ISSN: 2161-2072, DOI: 10.1364/OE.15.005059

## Description

## Technical Field

The present invention relates to a method, device, computer program and system for converting a measurement of a lens, preferably an ophthalmic lens.

## Prior art

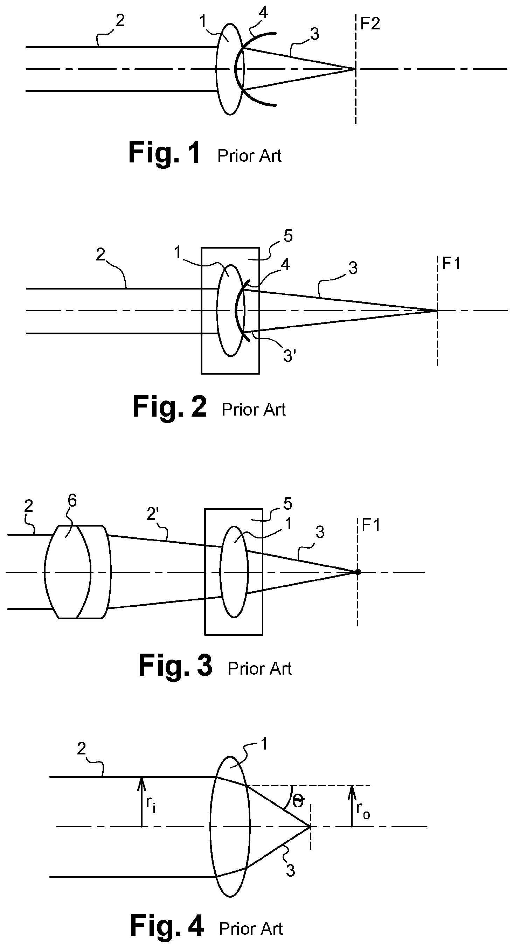

Many lens manufacturing processes include a strict quality control. Examples for ophthalmic lenses are contact lenses or intraocular lenses (IOL). One important parameter of the ophthalmic lens to be controlled is for example the focus of the lens (also called the power of the lens), but other control parameters can be part of the quality control as well. To measure the desired control parameter(s) of the ophthalmic lens, the lens to be analysed 1 is illuminated with an incident light 2 and the exit light 3 transmitted through the lens to be analysed 1 is analysed as shown in the example of Fig. 1. The incident light 2 is often a collimated light beam. In modern lens mappers, the wave front 4 of the exit light 3 is measured, but it is also possible to measure just the focal point F2 of the exit length or other parameters of the exit light 3. Based on the measured exit light, e.g. the wave front, parameters of the ophthalmic lens are determined. In some situations, the control parameters are desired in another measurement condition, e.g. in a solution (wet condition). In this case, the lens to be analysed 1 could be measured in this other measurement condition, e.g. in a liquid 5 to obtain the control parameters in the wet condition as shown in Fig. 2. As visible from Fig. 1 and 2, the focal point F1 of the exit light 3 of the lens to be analysed 1 in the wet condition is different than the focal point F2 of the exit light 3 of the lens to be analysed 1 in air.

However, in many situations lens measurement requires a conversion of the measurement result. One conversion scenario is when the lens 1 is measured in a first measurement condition, while the parameters are required for a second measurement condition as will be explained with the following examples.

A first example is the measurement for contact lenses. The standard ISO 18369-3:2016(E) for the characterization of contact lenses requests to report the performance in air (as shown in Fig. 1) while it is measured in a saline solution 5 (see Fig. 2). The change of refractive index of the surrounding medium 5, from 1.336 to 1, changes the refraction of the light rays by the ophthalmic lens 1. This is called a wet-to-dry conversion. In a first approximation, the change of direction of light 3' at the exit of the lens is proportional to the ratio of the two refractive indexes. In an actual experiment, the light 3' will suffer another refraction when going from the liquid to the air through the cuvette. This effect is straightforward to describe since the two faces of the cuvette are parallel. For the sake of simplicity of the discussion, the refraction from the liquid to the air is neglected in the present discussion. In Campbell C. Converting wet cell measured soft lens power to vertex power in air. Int Contact Lens Clin. 1984;11:168-71 is proposed a model that takes into account the parameters of the lens 1 (including at least refractive index, thickness, radius of curvature) in order to compute the power in air from the power measured in the saline solution 5. The model assumes that the two surfaces are spherical, and it is valid in a paraxial approximation. In practice, the conversion becomes much less accurate when the surface shapes deviate from spheres and for high optical powers.

A second example is the measurement of an IOL. For IOL, it is the opposite. The standard ISO 11979-2:2014(E) requests to report the results of the measurements to be performed in a cuvette filled with a saline solution 5 (as shown in Fig. 2) while some lens manufacturers prefer to perform the measurement in air (as shown in Fig. 1). The conversion becomes a dry-to-wet conversion, but the principle remains unchanged.

A third example refers also to the IOL. The ISO 11979-2:2014(E) standard requests to measure the optical performance of a lens 1 with a model cornea 6 (as shown in Fig. 3) in order to mimic the performance of the IOL 1 when it is implemented in the eye. On the one hand, this configuration takes into account all aberrations introduced by the model cornea 6 itself, by the IOL alone and by the combination of the two. On the other hand, the curvature of the wavefront to be measured is much higher since in a first approximation, the powers of the model cornea 6 and of the IOL 1 under test add up. In addition, the alignment of the IOL 1 with respect to the model cornea 6 becomes critical. In practice, most of the lens mappers for lens inspection do not integrate a physical model cornea 6. Therefore, the incident light 2 is collimated. They rather measure lens 1 without the cornea model 6 like in Fig. 1 or 2 and add the effect of the cornea model numerically. Since the incident beam 1 is then collimated, this configuration offers a better accuracy since the wavefront 4 is more flat, and there is no constraint of an alignment with the physical cornea model that could generate measurement error. In a paraxial approximation, the effects of the convergence of the beam generated by the model cornea 6 are neglected and the wavefront of the exit light 3 of the IOL 1 is approximated as the sum of (i) the wavefront generated by a digital model cornea and (ii) the wavefront generated by the IOL 1 measured.. This approximation of the effect of the cornea model is straightforward to implement but it might result in a wrong estimation of the optical performance of IOLs 1.

Ray-tracing simulation is a high-precision method to simulate optical performance of lenses or lens assemblies.

Obviously, it requires the knowledge of the lenses to be simulated. In contrast, it is expected that a lens mapper shall be capable of inspecting a lens and of reporting its optical performance without knowing the detailed lens design.

DE102016209720 proposes therefore to experimentally measure the wave front 4 of the exit light 3 of the IOL 1 without the cornea model 6 as shown in Fig. 1 or 2. A digital lens model of the IOL 1 is estimated based on the experimentally measured wave front 4 of the exit light 3. A converted digital lens model comprising a digital cornea model and the digital lens model of the IOL 1 is computed. A converted wave front of the exit light of the IOL with the cornea model is computed based on raytracing in the converted digital lens model. The parameters of the IOL 1 with the cornea model can than be determined from the numerically computed wave front. Due to the full raytracing simulation of the digital cornea model and the estimated digital lens model, the approximation errors for the numerical conversions might be reduced, if the estimated digital lens model fully describes the actual lens. Any feature of the lens that is not well represented will result in an error when computing the optical performance with the cornea model. Consequences of this are manifold. The numerically obtained corrected wave front might not reflect minor surface irregularities like scratches on the lens 1 which could impact the optical performance of the lens Complex lenses, like aspheric toric lenses or multifocal lenses with distinct areas, require lens models with multiple parameters. An accurate estimation of all parameters might be numerically challenging, in particular when parameters are coupled. The lens to be tested might deviate from the design, which could make the model inaccurate. A good description of the deviations between the design and the tested lens might require a complex model. Therefore, there is an important risk that the lens model is a too optimistic representation of the test lens. The simulated performance with the digital lens model will then wrongly estimate the actual performance of the tested lens. Finally, there are lens design that are realistically impossible to represent with a lens model. For example, a multifocal diffractive lens integrates a grating engraved in one of the two surfaces and that generates multiple fixed foci. The exact description of the complex structure is crucial for simulating the correct optical of the lens. Thus, this solution proposed in the above-mentioned German patent application is not applicable for complex lens designs like diffractive lenses.

Fig. 4 shows a further conversion scenario of the state of the art that concerns deflectometry. Normally, deviation mapsof the exit light 3 is measured by measuring a parameter tuple of the output position ro and the output angle of the exit light 3. While the output angle is the same at all measurement positions along the optical axis, the output position ro is sensitive to the measurement position, i.e. the distance between the vertex of the lens and the measurement plane. Therefore, some measurement devices measure the parameter tuple of the input position of the incident light and the output angle of the exit light 3 instead. Especially, when the incident light is a collimated light, the input position ri is not depending (in a very good approximation) on the measurement position and can thus be measured very reliably. In a thin lens approximation, the input position is equal to the output position. Therefore, replacing the output position by the input position is negligible when computing the wavefront but it offers a measurement configuration that is much less critical in terms of alignment. However, this measurement principle might not work when the thin lens approximation does not hold anymore and the input position ri does not correspond anymore to the output position ro.

### Brief summary of the invention

It is the object of the invention to find a system, method, computer program or apparatus for solving the above-mentioned problems of the state of the art, in particular to find an improved way of numerically converting measurements with a high quality. In particular, it is desired to numerically convert an experimental measurement realized in a first measurement condition into a second measurement condition. A further object is to numerically convert a first experimental measurement parameter set into a second measurement parameter set.

According to the invention, this object is solved by a method, computer program, a device or a system for conversion of a measurement of a lens into another measurement condition according to the independent claims.

By combining the experimental lens measurement and the converted digital lens measurement, the final measurement result is significantly improved compared to state-of-the-art conversion. Due to the use of the digital lens measurement obtained by the digital lens model, the conversion can be significantly improved compared to conversions based on assumptions of the paraxial approximation or on the thin lens approximation. Since the experimental lens measurement is combined with the digital lens measurement to obtain the converted measurement result, the details of the lens, like the surface properties of a diffractive lens are not lost. This combination brings the conversion technology for lenses to a new level. The invention allows to solve all conversion problems of lenses with a high precision and can thus also be applied for complex lenses like diffractive lenses. This solution solves all the conversion problems for the measurement of ophthalmic lenses and is therefore particularly advantageous for an application with ophthalmic lenses.

According to the invention, this object is solved by a method according to claim 1.

According to the invention, this object is solved by a method according to claim 7.

The calculation of the conversion correction based on the first and second digital lens model is much more precise than the state-of-the-art conversion corrections. By applying this conversion correction on the experimental lens measurement, the true measurement is converted in the second measurement condition with a high quality conversion so that the details of the measurement are not lost in the measurement result as would be the case, if simply the modelled measurement result in the second measurement condition would be used. In addition, this approach is less sensitive to errors for determining the lens model compared to the use of the second digital lens measurement as a measurement result. Since the same errors appear in the first digital lens model and in the second digital lens model, these errors are kind of cancelled out when calculating the conversion correction which is not the case with the method of the state-of-the-art using just the second digital lens measurement without the combination with the experimental lens measurement. Thus, a high-quality conversion correction can be calculated based on the digital lens model, but the true first experimental lens measurement is used for applying the conversion correction so that the information from the experimental measurement are not lost. This solution solves the common conversion problem of ophthalmic lenses from a first measurement condition to a second measurement and is therefore particularly advantageous for an application with ophthalmic lenses.

Thus, the invention allows to transfer the experimental measurement result into another parameter space without assuming any approximation. This increases the precision of the measurement result in the other parameter space.

In the following, further advantageous embodiments are listed.

In one embodiment, the first digital lens model is determined/estimated based on an iterative parameter optimization procedure with a plurality of iterative steps.

In one embodiment, one or more or each iterative step comprises the following steps: a new set of parameter values of this iterative step of the lens is determined; a digital lens model of this iterative step based on the new set of parameter values is determined; a digital lens measurement of this iterative step is determined by a ray tracing simulation of the digital lens model of this iterative step; and the digital lens measurement of this iterative step is compared with the experimental first lens measurement. Preferably, the iterative parameter optimization procedure is terminated, when a certain stop criterium is fulfilled. The stop criterium could be a value evaluating the difference between the digital lens measurement of the last iterative step and the experimental first lens measurement. The new set of parameters of the last iterative step (and having fulfilled the stop criterium) is used as the estimated first digital lens model.

In one embodiment, the at least one parameter of the lens received is constraint in the iterative parameter optimization procedure. That is that the at least one parameter received is not/never changed in the new set of parameters between two subsequent iterative steps. This has the advantage that the risk of the iterative optimization procedure running into a wrong or local maximum and thus into a wrong estimator for the set of parameters determining the digital lens model is significantly reduced.

In one embodiment, the digital lens measurement is determined by a ray tracing simulation of the digital lens model. In one embodiment, the (first) digital lens measurement is determined by a ray tracing simulation of the (first) digital lens model in the first measurement condition. In one embodiment, the second/converted digital lens measurement is determined by a ray tracing simulation of the second/converted digital lens model in the second measurement condition.

In one embodiment, in the first measurement condition, the lens is arranged in a fluid, and in the second measurement condition, the lens is arranged in a gas, preferably air. That is that the experimental lens measurement is obtained by measuring the exit light from the lens being arranged in the fluid. The fluid is preferably a salt solution, i.e. salty water. The measurement result in the second measurement condition would thus represent the measurement result of the lens in the gas. The gas is preferably air.

In one embodiment, in the first measurement condition, the lens is arranged in a gas, and in the second measurement condition, the lens is arranged in a fluid. That is that the experimental lens measurement is obtained by measuring the exit light from the lens being arranged in the gas. The gas is preferably air. The measurement result in the second measurement condition would thus represent the measurement result of the lens in the fluid. The fluid is preferably a salt solution, i.e. salty water.

In one embodiment, in the first measurement condition, the influence of the cornea model is not considered, and in the second measurement condition, the influence of the cornea model is considered. That is that the experimental lens measurement is obtained by illuminating the lens with an incident light without having passed a cornea model and measuring the exit light from the lens. The measurement result in the second measurement condition would thus represent the measurement result of the lens being illuminated with an incident light having passed the cornea model before entering the lens. This allows to numerically consider the effect of the cornea model with a high precision, even for thick lenses or other lenses for which the paraxial approximation does not hold. It further avoids the difficulty to align the physical cornea model with the lens for the measurement.

In one embodiment, the experimental lens measurement, the digital first lens measurement and/or the digital second lens measurement is a measurement map. A measurement map is preferably a two (or higher) dimensional measurement matrix of the exit light of the lens. In one embodiment, points of a measurement map represent points on a wavefront of the exit light. In another embodiment, the measurement map comprises (at least) two deviation maps of the exit light of the lens. The two deviation maps are measured along two directions, preferably along two perpendicular directions.

In one embodiment, the measurement result is a measurement map or a wavefront measurement of the exit light of the lens. In one embodiment, the measurement result is a measurement map or a wavefront measurement of the exit light of the lens in the second measurement condition. In one embodiment, the measurement result is a measurement map or a wavefront measurement of the exit light of the lens comprising a plurality of points, wherein each point is represented by a measurement tuple comprising one experimentally measured parameter and one converted digital parameter.

In one embodiment, a parameter of the lens in the second measurement condition is determined based on the measurement result or the measurement map.

In one embodiment, the measurement result is a parameter of the lens.

In one embodiment, the step of receiving the experimental lens measurement of the lens comprises the steps of: Illuminating the lens with an incident light interacting with the lens and creating an exit light caused by the interaction of the incident light with the lens; and measuring the exit light to obtain the experimental first lens measurement. Preferably, the incident light is a collimated light or substantially collimated light. In one embodiment, the lens, in the first measurement condition, is illuminated with the incident light.

In one embodiment, the system comprises a lens measurer according to claim 15 and configured to measure the exit light of a lens, e.g. in the first measurement condition. Preferably, the lens mapper comprises a light source for illuminating the lens with incident light. The incident light interacting with, preferably traversing the lens to create an exit light. Preferably, the lens measurer comprises a light sensor for sensing said exit light to measure the experimental lens measurement. Preferably, the experimental lens measurement from the lens measurer is sent to / received by the device for conversion of the measurement of the lens. The lens measurer is preferably a lens mapper.

In one embodiment, the lens measurer and the device for the conversion are arranged in the same device.

In one embodiment, the system comprises a device according to claim 14.

In one embodiment, there is a computer program according to claim 13.

Brief description of the **Drawings**

Figure 1 is a state-of-the-art measurement of an ophthalmic lens in dry conditions.

Figure 2 is a state-of-the-art measurement of an ophthalmic lens in wet conditions.

Figure 3 is a state-of-the-art measurement of an ophthalmic lens in wet conditions with a cornea model.

Figure 4 is a state-of-the-art measurement technique of an ophthalmic lens by deflectometry.

Figure 5 is a flow chart explaining the steps of a first embodiment of a method for conversion of a measurement of an ophthalmic lens.

Figure 6 is a flow chart explaining the steps of an application of the method of Fig. 5 or of Fig. 10.

Figure 7 shows schematically a first embodiment of a device for conversion of a measurement of an ophthalmic lens.

Figure 8 shows schematically a first embodiment of a system for measuring an ophthalmic lens.

Figure 9 shows schematically a second embodiment of a system for measuring an ophthalmic lens.

Figure 10 is a flow chart explaining the steps of an embodiment of a method for conversion of a measurement of an ophthalmic lens.

Figure 11 shows schematically a second embodiment of a device for conversion of a measurement of an ophthalmic lens.

In the drawings, the same reference numbers have been allocated to the same or analogue element.

**Detailed description of an embodiment of the invention**

Other characteristics and advantages of the present invention will be derived from the non-limitative following description, and by making reference to the drawings and the examples.

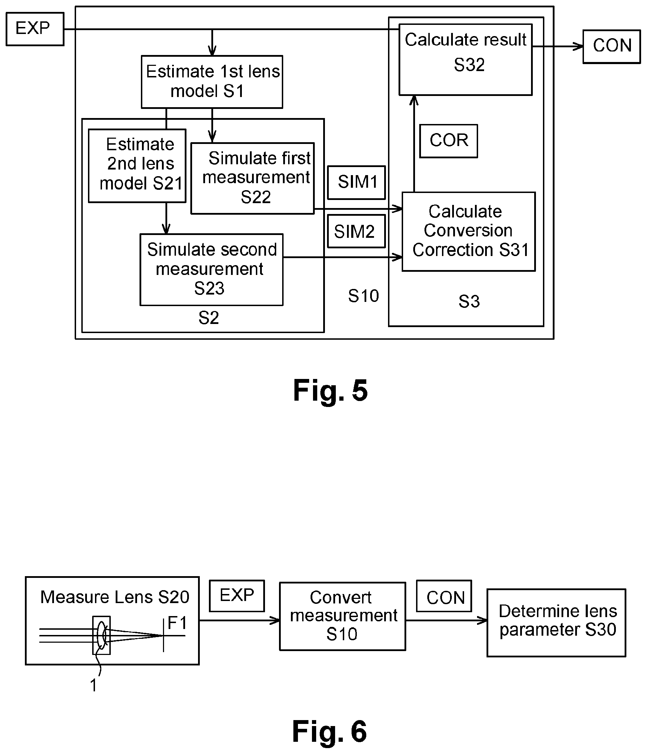

Fig. 5 shows a first embodiment of a method for a measurement conversion for converting an experimental lens measurement EXP from a first measurement condition into a second measurement condition. The first and the second measurement condition can represent a different measurement medium around the ophthalmic lens 1. In a first measurement scenario, the first measurement condition could be the ophthalmic lens 1 being arranged in a first measurement medium with a first refractive index. The second measurement condition could be the ophthalmic lens 1 being arranged in a second measurement medium with a second refractive index (being different than the first refractive index). The first medium could be a liquid, preferably a water, preferably a salty water solution (refractive index around 1.3) and the second medium could be a gas, preferably air (refractive index around 1.0) (wet-to-dry-conversion) or vice versa (dry-to-wet-conversion). Due to the different refractive index, the light measurement in the first measurement condition would be different in the second measurement condition. Fig. 1 shows an example of the ophthalmic lens 1 being measured in air, while Fig. 2 shows an example of the ophthalmic lens 1 being measured in a liquid. The ophthalmic lens 1 measured in a liquid or in a wet measurement condition means normally that the ophthalmic lens 1 is arranged in a liquid in a cuvette or container. The incident light 2 enters the cuvette, the liquid 5, the ophthalmic lens 1 and the exit light 3' goes from the ophthalmic lens 1 into the liquid, from the liquid into the cuvette and from the cuvette into air where the final exit light 3 is measured. Thus, just the lens 1 is arranged in the liquid, while the light source and/or the light sensor are arranged outside of the liquid. However, in a less preferred embodiment, the light source or the light sensor could be also arranged in the liquid. In a second measurement scenario, the first measurement condition represents the measurement of the ophthalmic lens 1 without a cornea model 6 (see for example Fig. 2), while the second measurement condition represents the measurement of the ophthalmic lens 1 with a cornea model 6 (see for example Fig. 3) (cornea conversion). In the second measurement condition, the incident light 2 traverses the cornea model 6 before reaching the ophthalmic lens 1. Thus, instead of the original incident light 2, the lens 1 is illuminated by a light 2' further focused by the cornea model 6. Thus, in the second measurement scenario, the method converts from a first measurement condition with a first type of incident light 2 into a measurement condition with a second type of incident light 2'. The second measurement scenario could be combined with the first measurement scenario, for example, if the lens 1 is measured in air without a cornea model 6 (see Fig. 1) and shall be converted into a second measurement in liquid with a cornea model (see Fig. 3).

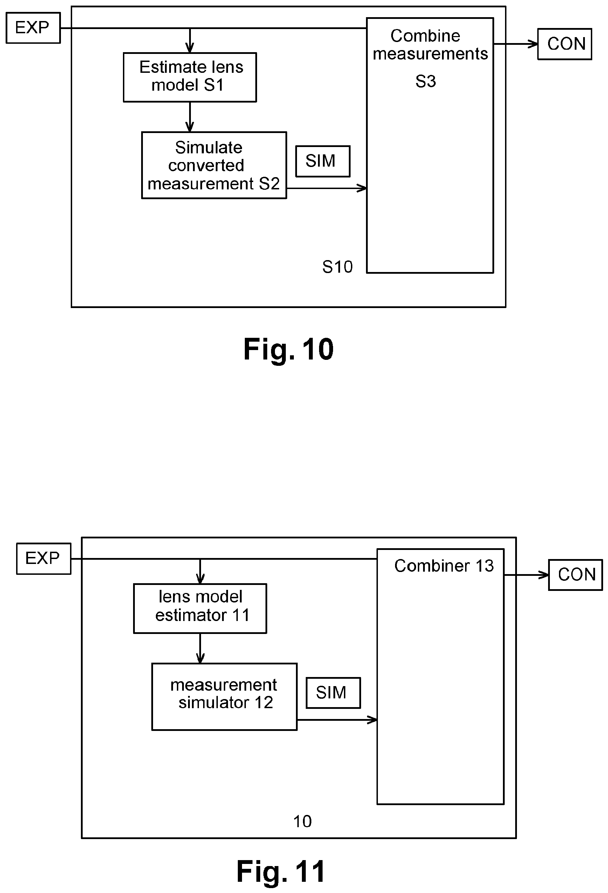

Fig. 10 shows a second embodiment of a method for a measurement conversion of an experimental lens measurement EXP to a converted lens measurement CON. In this embodiment, the experimental lens measurement EXP is not converted to another measurement condition, but rather to another measurement parameter set.

The method for measurement conversion will be described subsequently together for both embodiments. If not explicitly specified that a certain step applies only for one of the two embodiments, the subsequent description applies for both embodiments.

In a step, an experimental lens measurement EXP is received. The experimental lens measurement EXP can be received over a receiving section (shortly also called interface). This interface can be a user input, a cable interface or a wireless interface. The interface can also be an internet connection. The interface is preferably a digital interface for receiving the experimental lens measurement EXP in a digital format. However, the interface could also be an analogue interface. The interface is preferably connected to a lens measurer 20 so that the interface receives the experimental lens measurement EXP automatically and directly from the lens measurer 20 (without any intervention from a human). However, the interface could also necessitate a human intervention, e.g. uploading the experimental lens measurement EXP over the interface, e.g. from a memory plugged in the interface or from a client device in case of a server-client arrangement.

The experimental lens measurement EXP represents a light measurement of the ophthalmic lens 1. The light measurement is preferably a measurement of an exit light 3 having interacted with the ophthalmic lens 1, after its illumination with an incident light. The light measurement of the exit light 3 can also be a combined light measurement of the exit light 3 and the incident light 2 as shown for example in Fig. 4 and as in the second embodiment. The light measurement will be described in more detail in the context of Fig. 6. The light measurement results preferably in a measurement map of the exit light 3. The measurement map is preferably configured to determine a wavefront measurement of the exit light. The measurement map comprises preferably a plurality of (measurement) points extending in two dimensions. Each point of the plurality of points can comprise one or more measurement parameters. In one embodiment, each point of the plurality of points can comprises a measurement tuple comprising at least two parameters (per point). It is also possible that the measurement map comprises a plurality of points extending in three (spatial) dimensions. In a less preferred embodiment, it is also possible that the experimental lens measurement EXP comprises a plurality of points extending just in one (spatial) dimension or only one measurement point. The experimental lens measurement EXP or the measurement map might be determined by a combination of a plurality of light measurements. The plurality of light measurements can comprise the light measurements resulting from different incident light situations. The experimental lens measurement EXP can also comprise the plurality of light measurements (without combining them to a combined light measurement).

In the first embodiment, the experimental lens measurement EXP represents a light measurement of the ophthalmic lens in the first measurement condition.

In the second embodiment, the experimental lens measurement EXP represents a light measurement of the ophthalmic lens comprising an experimental parameter tuple. The experimental parameter tuple comprises preferably a first experimental and a second experimental parameter. The experimental parameter tuple can comprise even more parameters than the mentioned two. Preferably, the experimental lens measurement EXP is a measurement map comprising a plurality of points, wherein each point comprises such an experimental parameter tuple. In a preferred embodiment, the first experimental parameter is the input position $r_i$ of the incident light 2. In a preferred embodiment, the second experimental parameter is the output angle $\theta$ of the exit light 3. Thus, in the second embodiment, the light measurement is a mixture of the incident light 2 and the exit light 3.

In step S1, a digital lens model is determined/estimated/obtained based on the experimental lens measurement EXP. The digital lens model is a numerical/digital representation of the ophthalmic lens 1. The digital lens model is preferably a three-dimensional representation of the form of the ophthalmic lens. The digital lens model is preferably described by a set of parameters. This set of parameters includes for example the curvature of its surface or a plurality of curvature for more complex lens designs, the refraction index of its material, the thickness of the lens, etc. For more complex lens designs, the set of parameters could be a description of the three-dimensional form of the ophthalmic lens 1 and its refraction index. A digital lens model is then described by a set of parameter values for the set of parameters. In one embodiment, this is realized by a parameter estimation/optimization algorithm which receives the experimental lens measurement EXP as input and outputs the best estimator for the set of parameters describing the ophthalmic lens 1. The optimization algorithm is preferably an iterative procedure which optimizes the set of parameters describing the digital lens model in each iteration step. For example, each iteration step comprises the following steps: determining a new set of parameter values of this iterative step of the ophthalmic lens; determining a digital lens model of this iterative step based on the new set of parameters; determining a digital lens measurement of this iterative step based on the digital lens model of this iterative step; and comparing the digital lens measurement of this iterative step with the experimental first lens measurement (resulting in a comparison result). The new set of parameters of an iteration step is preferably based on the new set of parameters from the previous iteration step and/or based on the comparison result. The selection of the new set of parameters depends highly on the optimization algorithm used. The selection of the new set of parameters of the iteration step can also be done randomly. The digital lens measurement of this iterative step is preferably determined by a ray tracing simulation of the digital lens model of this iterative step. The comparison result of an iteration step gives an indication about the quality of the new set of parameters of this iteration step. The iterative procedure is preferably repeated until a certain stop criterium is fulfilled. This could be for example a maximum number of iteration steps, a threshold for the comparison result or a threshold for the improvement of the comparison result compared to the comparison result of the previous step or of another previous iteration step being classified as the best performer. In the first iteration step, the new set of parameter values can be initialized randomly or with a certain predefined value for the set of parameters. Finally, after the stop criterium is fulfilled, the best performing set of parameter values is used as the digital lens model describing the ophthalmic lens 1. However, it is also possible to determine/compute/estimate the digital lens model with a different process, i.e. not with an iterative process. This can be for example realized by an analytic solution for the estimator.

In a preferred embodiment, a user can input one or more (known) parameters of the ophthalmic lens 1. Thus, the corresponding parameters of the set of parameters describing the digital lens model are constraint to the inserted values for these known parameters. This significantly improves the estimation quality of the digital lens model.

The digital lens model describes preferably the digital lens model alone without any consideration of the measurement condition of the ophthalmic lens. However, it is also possible that the digital lens model describes the digital lens model in the (first) measurement condition in which the ophthalmic lens 1 is measured. In the latter case, the (first) digital lens model needs to provide additional parameters describing the (first) measurement condition.

In step S2, a converted digital lens measurement SIM or SIM2 representing a converted lens measurement of the ophthalmic lens is determined based on the digital lens model. The converted digital lens measurement represents a light measurement of the ophthalmic lens 1 obtained digitally or numerically from the (converted) digital lens model. The light measurement is preferably a measurement map as described in more detail above for the experimental lens measurement (just obtained digitally).

In the first embodiment shown in Fig. 5, the step S2 of determining a converted digital lens measurement SIM2 based on the digital lens model comprises the following steps.

In step S21a converted or second digital lens model representing the ophthalmic lens 1 in the second measurement condition is determined/calculated/computed based on the (first) digital lens model. In other words, the digital lens model is converted into the converted digital lens model. Thus, the converted digital lens model comprises a parameter set describing the ophthalmic lens 1 and the second measurement condition. This can be a medium around the ophthalmic lens 1 (wet-to-dry conversion or dry-to-wet-conversion) or an additional cornea model (cornea conversion) which is added in the converted digital lens model to the digital lens model. The converted digital lens model for a wet-to-dry conversion or a dry-to-wet conversion could consider also the influence of the cuvette around the liquid in the first measurement (for the wet-to-dry conversion) or in the second measurement condition (for the wet-to-dry conversion). However, the cuvette could in a less preferred embodiment also be neglected. The cornea model describes here a digital representation of the cornea of a patient. The cornea model is preferably a digital model with one of the configurations defined in the standard for IOL mentioned above. The configurations defined in the standard define several lens configurations with different levels of aberration. In a preferred embodiment, a user could select one of several different standardized cornea models. Since the cornea describes the influence of the eye on the incident light of the IOL 1, the cornea model is often also referred as the eye model. The cornea model describes just the influence of the cornea without the influence of the IOL 1. The cornea model is in one embodiment a standardized model for the influence of the cornea. In one embodiment, the cornea model to be used can be selected from different standard cornea models, e.g. with different levels of spherical aberration. In one embodiment, the cornea model could also be a patient specific

7

cornea model, e.g. resulting from a separate measurement of the cornea of the patient.

In step S23, the converted or second digital lens measurement SIM2 is determined based on the converted or second digital lens model (determined in step S21). Preferably, the converted or second digital lens measurement SIM2 is determined based on a raytracing simulation of the converted or second digital lens model. The converted digital lens measurement SIM2 has preferably the same settings as the experimental lens measurement EXP, e.g. a measurement map with the same number of points, the same measurement parameters, etc. However, it is also possible that the converted digital lens measurement SIM2 and the experimental lens measurement EXP have different settings. The description of the settings of experimental lens measurement EXP holds therefore also for the converted/second digital lens measurement and is for the sake of brevity not repeated.

In step S22, the (first) digital lens measurement SIM1 is determined based on the (first) digital lens model in the first measurement condition. If the digital lens model determined in the step S1 already represents the ophthalmic lens 1 in the first condition, the digital lens model determined in step S1 can directly be used for determining the (first) digital lens measurement SIM1. Otherwise, the (first) digital lens model is transformed/converted into the (first) digital lens model in the first measurement condition. Preferably, the (first) digital lens measurement SIM1 is determined based on a raytracing simulation of the (first) digital lens model in the first measurement condition. The (first) digital lens measurement SIM1 has preferably the same settings as the experimental lens measurement EXP and/or as the converted/second digital lens measurement SIM2, e.g. a measurement map with the same number of points, the same measurement parameters, etc.. The description of the settings of experimental lens measurement EXP holds therefore also for the (first) digital lens measurement and is for the sake of brevity not repeated. However, it is also possible that the digital lens measurement SIM1 and the experimental lens measurement EXP and/or the converted digital lens measurement SIM2 have different settings.

In the second embodiment as shown in Fig. 10, the converted digital lens measurement SIM of step S2 is obtained by a raytracing simulation of the digital lens model. The converted digital lens measurement SIM comprises preferably (at least one) digital parameter being different from the parameter(s) measured in the experimental lens measurement EXP, in particular being different from the first and/or second experimental parameter. In other words, the converted digital lens measurement SIM (digitally) converts the (experimental) measurement result EXP from the parameter space of the experimental measurement result EXP into a different parameter space of the converted measurement result SIM. The parameter spaces of EXP and SIM distinguish in at least one parameter. Different parameters shall not mean that the same parameter has different values or realisations, but that actually the values of the different parameters (even if they have the same numerical value) describe different physical characteristics of the lens. Preferably, the digital parameter is the output position ro of the exit light 3 as shown in Fig. 4. Preferably, the converted digital lens measurement SIM comprises preferably a digital parameter tuple comprising the digital parameter and a further digital parameter. The further digital parameter being preferably the output angle $\theta$ of the exit light 3 as shown in Fig. 4. Thus, the raytracing simulation of the digital lens model is used to determine the digital parameter of the ophthalmic lens.

In step S3, a measurement result CON is determined based on the experimental lens measurement EXP and the converted digital lens measurement SIM or SIM2. The measurement result CON is determined by combining the experimental lens measurement EXP with the converted digital lens measurement SIM or SIM2 (obtained in step S2). This combination of the experimental and the simulated digital measurement is the reason for the high-quality conversion obtained by the present invention.

In the first embodiment in Fig. 5, the step S3 contains the following steps.

In step S31, a conversion correction COR is determined/calculated/computed based on the (first) digital lens measurement SIM1 and the converted/second digital lens measurement SIM2. Depending on the conversion to be performed, the conversion correction can be calculated differently.

In a first embodiment of the conversion correction, the conversion correction is a conversion correction factor COR1 obtained by the ratio (or a function of the ratio) of the converted digital lens measurement SIM2 and the digital lens measurement SIM.

$$COR1 = SIM2/SIM1 \tag{1}$$

Preferably, the converted/second digital lens measurement SIM2 is divided through the (first) digital lens measurement SIM1. This conversion correction factor COR1 is preferably used for the medium conversion like a wet-to-dry-conversion or a dry-to-wet-conversion. If the converted digital lens measurement SIM2 and the digital lens measurement SIM1 are measurement maps, the division operation is performed point wise. For regular measurement map arranged in rows and columns, the point in the i-th row and the j-th column of the conversion correction factor COR1(i,j) is obtained by the ration of the corresponding points in the converted digital lens measurement SIM2(i,j) and the digital lens measurement SIM1(i,j) COR1(i,j)=SIM2(i,j)/SIM1(i,j).

In a second embodiment of the conversion correction, the conversion correction is a conversion correction term COR2 obtained by the difference (or a function of the difference) of the converted digital lens measurement SIM2 and the digital lens measurement SIM.

$$COR2 = SIM2 - SIM1 \qquad (2)$$

Preferably, the (first) digital lens measurement SIM is subtracted from the converted/second digital lens measurement SIM2. This conversion correction term COR2 is preferably used for the cornea-conversion.

Other embodiments of the conversion correction COR are possible. The advantage of the conversion correction COR obtained based on the (first) digital lens measurement SIM and the converted/second digital lens measurement SIM2 is that estimation errors of the digital lens model in step S1 are at least partially cancelled out as they appear equally in the (first) digital lens measurement SIM and the converted/second digital lens measurement SIM2. Thus, even if there are estimation errors in the digital lens model, the obtained conversion correction is always better than a theoretical conversion correction based on a paraxial approximation.

In step S32, the measurement result CON for the ophthalmic lens 1 in the second measurement condition is determined/obtained based on the experimental lens measurement EXP and the conversion correction COR (obtained from the converted digital lens measurement SIM2 in step S31). Thus, the experimental lens measurement EXP is converted from the first measurement condition into the second measurement condition by the application of the conversion correction COR on the experimental lens measurement EXP.

In the first embodiment of the conversion correction, the conversion correction factor COR1 is applied to the experimental lens measurement EXP by a multiplication or division (or a function of the multiplication or of the division) (depending on how the ratio is calculated). If the conversion correction factor is calculated as equation (1), the conversion correction factor COR1 is applied by a multiplication and the measurement result is obtained by

$$CON = EXP * COR1. \qquad (3)$$

If the experimental lens measurement EXP and the conversion correction factor are measurement maps, the multiplication (or division) operation is performed pointwise.

In the second embodiment of the conversion correction, the conversion correction term COR2 is applied to the experimental lens measurement EXP by an addition or subtraction (depending on how the difference is calculated). If the conversion correction term is calculated as equation (2), the conversion correction factor COR1 is applied by an addition and the measurement result is obtained by

$$CON = EXP + COR2. \qquad (4)$$

The obtained measurement result has preferably the same settings as the experimental lens measurement EXP and/or as the converted/second digital lens measurement SIM2 and/or as the (first) digital lens measurement SIM1, e.g. a measurement map with the same number of points and/or the same measurement parameters, etc.. The description of the settings of experimental lens measurement EXP holds therefore preferably also for the measurement result and is for the sake of brevity not repeated. However, it is also possible that the measurement result is not the measurement map obtained in equations (3) or (4), but a parameter determined based on this, e.g. the power of the lens. However, it is preferred that the measurement result CON is a measurement map representing the wavefront or the deviation maps of the ophthalmic lens 1 in the second measurement condition. This measurement result CON allows to determine all desired parameters of the ophthalmic lens 1.

The step S22 is here defined as being part of the step S2. However, it is equally possible to define S22 as a step of S3. The step S31 is here defined as being part of the step S3. However, it is equally possible to define the step S31 as part of step S2.

In the second embodiment in Fig. 10, the measurement result CON is obtained by combining at least one parameter of the experimental lens measurement EXP and at least one parameter of the converted digital lens measurement SIM. The at least one parameter of the experimental lens measurement EXP used in the measurement result CON is preferably the second experimental parameter, preferably the output angle θ. The at least one parameter of the converted digital lens measurement SIM used in the measurement result CON is preferably the digital parameter, preferably the output position ro. Thus, the measurement result CON combines the exact measurement of the output angle θ and the converted measurement of the output position ro. Due to the conversion of the input position ri into the output position ro based on the estimated digital lens model, the conversion is improved compared to a thin lens approximation in which ri is equal to ro. So, the very robust measurement of the ri and θ can be maintained also for ophthalmic lenses for which the thin lens approximation does not hold.

The two described conversions of a measurement condition could also be combined. For example, the dry-to-wet conversion could be combined with the cornea conversion as explained above. This could be achieved by measuring the ophthalmic lens 1 in air (as shown in Fig. 1) and performing first a dry-to-wet conversion resulting in a measurement CON1 in a wet condition as shown in Fig. 2. By applying the cornea conversion on CON1 (instead of EXP) will result in a final measurement result CON2 in a wet condition with cornea model (as shown in Fig. 3).

The described steps can be applied in a different sequence as the described one.

Fig. 6 shows further optional steps in addition to the conversion step S10 described previously in Fig. 5 and 10.

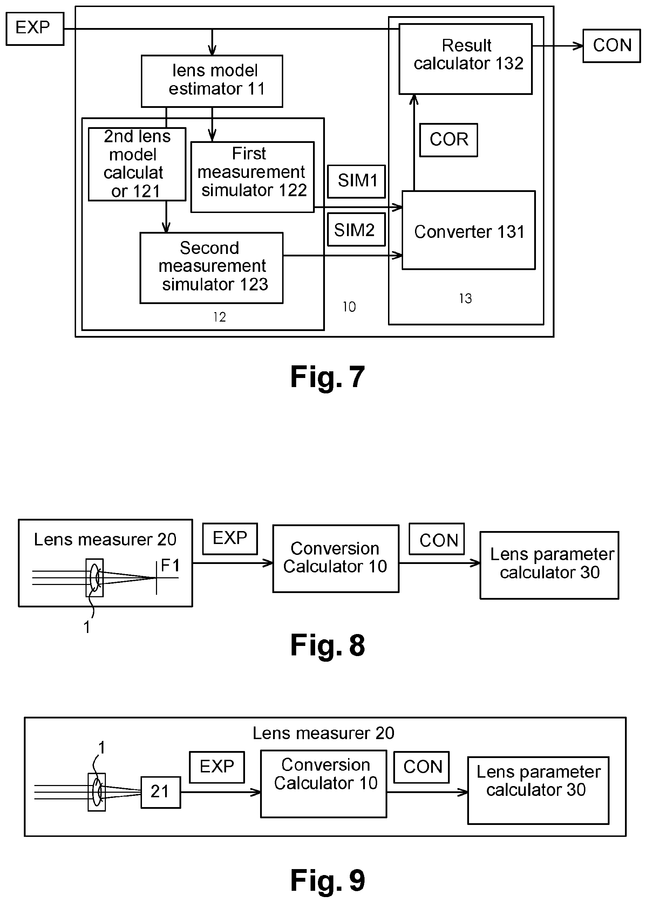

Preferably, the method comprises a step S20 of measuring the light of the ophthalmic lens 1. The step S20 comprises preferably the steps of illuminating the ophthalmic lens 1 with an incident light 2 and measuring an exit light 3 from the ophthalmic lens 1. The exit light 3 resulting from the incident light 2 after having interacted with the ophthalmic lens 1, preferably after having traversed the ophthalmic lens 1. The exit light 3 is preferably measured with a light sensor 20 shown for example in Fig. 9. The light measurement of the ophthalmic lens 1 of step S20 results in the experimental lens measurement EXP as described above. The light measurement of the ophthalmic lens 1 can comprise a plurality of light measurements which are combined to obtain the experimental lens measurement EXP.

The obtained experimental lens measurement EXP is converted in step S10 described above to obtain the (converted) measurement result CON.

The method comprises preferably a step S30 for determining/calculating/computing at least one lens parameter of the ophthalmic lens 1 based on the converted measurement result CON.

Preferably, the step S10 and eventually the step S30 is/are performed by a processing means. The processing means can be a standard computer, a special chip, a server connected over the internet, etc. The processing means can comprise a plurality of sub-processing devices as common in multi-kernel machines or server-parks. The sub-processing devices can also be separate processing devices performing separate steps of the conversion method S10 and evtl. S20.

A computer program according to the invention comprises a plurality of instructions configured to perform the steps of the conversion method S10 described above, when the instructions are executed on a processing means. The computer program can be transitory or non-transitory.

A computer program product according to the invention stores a plurality of instructions configured to perform the steps of the conversion method S10 described above when the instructions are executed on a processing means.

Fig. 7 shows a first embodiment of a device 10 for measurement conversion. In particular, Fig. 7 shows a first embodiment of a device for converting an experimental lens measurement of an ophthalmic lens 1 in a first measurement condition into a second measurement condition.

Fig. 11 shows a second embodiment of a device 10 for measurement conversion. In particular, Fig. 11 shows a second embodiment of a device for converting an experimental lens measurement EXP of an ophthalmic lens 1 in a converted parameter measurement CON.

Both embodiments will be described together where applicable and separately where they distinguish. The device 10 comprises the following:

A receiving means configured for receiving the experimental lens measurement EXP of the ophthalmic lens 1 from a light measurement of the ophthalmic lens 1. The receiving means can be a communication interface communicating directly with the lens measurer 20 shown in Fig. 8 or with a light sensor 21 of a lens measurer 20' as shown in Fig. 9. This receiving means can be a cable or a wireless communication interface. The receiving means can however also be a general communication interface like a USB connector, an ethernet connector or any interface allowing an internet connection for receiving the experimental lens measurement EXP. The receiving means is configured to perform the step of receiving the experimental lens measurement EXP described in more detail above.

A lens model estimator 11 for determining from the experimental first lens measurement EXP a digital lens model representing the ophthalmic lens. The lens model estimator 11 is configured to perform the step S1 described in more detail above.

A measurement simulator 12 determining, based on the digital lens model, a converted digital lens measurement SIM or SIM2 representing a converted lens measurement of the ophthalmic lens 1. The lens model estimator 11 is configured to perform the step S2 described in more detail above.

In the first embodiment of the device 10 shown in Fig. 7, the measurement simulator 12 comprises:

A further lens model estimator 121 for determining, based on the first digital lens model, a second/converted digital lens model representing the ophthalmic lens in the second measurement condition. The further lens model estimator 121 is configured to perform the step S21 described in more detail above.

A first measurement simulator 122 for determining, based on the first digital lens model, a first digital lens measurement representing a lens measurement of the ophthalmic lens in the first measurement condition. The first measurement simulator 11 is configured to perform the step S22 described in more detail above.

A second measurement simulator 123 for determining, based on the second digital lens model, a second digital lens measurement SIM2 representing a lens measurement of the ophthalmic lens in the second measurement condition. The second measurement simulator 123 is configured to perform the step S23 described in more detail above.

The device 10 comprises further a combiner 13 for determining, based on the experimental lens measurement EXP and the converted digital lens measurement SIM or SIM2, a measurement result CON for the ophthalmic lens 1. The combiner 13 is configured to perform the step S3 described in more detail above.

In the first embodiment of the device 10 shown in Fig. 7, the combiner 13 comprises:

A converter 131 for determining, based on the first digital lens measurement SIM1 and the second digital lens measurement SIM2, a conversion correction COR for a conversion from the first measurement condition to the second measurement condition. The converter 131 is configured to perform the step S31 described in more detail above.

A result calculator 132 for determining, based on the experimental lens measurement and the conversion correction, a measurement result for the ophthalmic lens in the second measurement condition. The result calculator 132 is configured to perform the step S32 described in more detail above.

Fig. 8 and 9 show an embodiment of a system comprising the conversion device 10 of Fig. 7 or 11 and a lens measurer 20 and/or a lens parameter calculator 30.

The lens measurer 20 is configured to perform the step S20 described in more detail above. The lens measurer 20 can be in the same device as the conversion device 10 as shown in Fig. 9 or in separate devices as shown in Fig. 8. In the latter case, the conversion calculator 10 can be a standard computer connected to the lens measurer 20 for receiving the experimental lens measurement EXP and for running a software configured to make the described conversion. In the embodiment of Fig. 8, the lens measurer 20' could comprise a control chip/software for performing the measurement conversion.

The lens parameter calculator 30 is configured to perform the step S30 described in more detail above.

The conversion calculator 10 can however also be operated without the lens measurer 20, e.g. as a server provided service which receives the experimental lens measurement EXP over the internet and sends back the converted measurement result CON and/or the calculated lens parameter.

The steps S31 (determining a conversion correction COR based on the digital lens measurement SIM1 and the converted digital lens measurement SIM2) and S32 (determining the measurement result CON for the lens in the second measurement condition based on the experimental lens measurement EXP and the conversion correction COR) shall equally include all methods determining in first step S31' a conversion correction COR' based on two of the digital lens measurement SIM1, the converted digital lens measurement SIM2 and the experimental lens measurement EXP, and determining in a second step S32' the measurement result for the lens in the second measurement condition CON' based on the third one of SIM1, SIM2 and EXP. E.g. in step S31', COR' can also be determined based on EXP and SIM1, e.g. COR1'=EXP/SIM1 or COR2'=EXP-SIM1, and in step S32', CON' is then determined based on SIM2 and COR'. As shown in the following formulas, this method the same result: CON=EXP+COR2=EXP+SIM2-SIM1=SIM2+EXP-SIM1=SIM2+COR2'=CON' or CO N=EXP*COR 1=EXP*SIM2/SIM1=SIM2*EXP/SIM1=SIM2*COR 1'=CON' .

In one embodiment, the different measurement conditions can represent different spectral characteristics of the incident light 2. In the first measurement condition, an incident light 2 with a first wavelength is used, while in the second measurement condition, an incident light with a second wavelength or a range of wavelengths being different from the first is desired for the result CON. In this case COR2 could be used in steps S31 and S32.

The described embodiment referred to the example of an ophthalmic lens. It is understood that the invention can be equally applied for other lenses.

**Claims**

1. Method for conversion of a measurement of a lens (1) comprising the following steps:

> receiving an experimental lens measurement (EXP) of the lens (1) from a light measurement of the lens (1);
> determining from the experimental lens measurement (EXP) a digital lens model representing the lens (1) (S1);
> determining, based on the digital lens model, a converted digital lens model representing the lens (1) in a second measurement condition (S21);
> determining, based on the converted digital lens model, a converted digital lens measurement (SIM2) representing a lens measurement of the lens (1) in the second measurement condition (S23);
> **characterized in**
> determining, based on the digital lens model, a digital lens measurement (SIM1) representing a lens measurement of the lens (1) in the first measurement condition (S22);
> determining a conversion correction (COR) for the conversion from the first measurement condition to the second measurement condition based on two of the digital lens measurement (SIM1), the converted digital lens measurement (SIM2) and the experimental lens measurement (EXP) (S31);
determining the measurement result (CON) for the lens (1) in the second measurement condition (S32).

2. Method according to claim 1, wherein the conversion correction (COR) is a conversion correction factor obtained by the ratio or a function of the ratio of the two of the digital lens measurement (SIM1), the converted digital lens measurement (SIM2) and the experimental lens measurement (EXP).

3. Method according to claim 1, wherein the conversion correction (COR) is a conversion correction term obtained by the difference or a function of the difference of the two of the digital lens measurement (SIM1), the converted digital lens measurement (SIM2) and the experimental lens measurement (EXP).

4. Method according to one of claims 1 to 3, wherein either

in the first measurement condition, the lens (1) is arranged in a fluid, and in the second measurement condition, the lens (1) is arranged in a gas; or
in the first measurement condition, the lens (1) is arranged in a gas, and in the second measurement condition, the lens (1) is arranged in a fluid.

5. Method according to one of claims 1 to 4, wherein in the first measurement condition, the influence of the cornea model is not considered, and in the second measurement condition, the influence of the cornea model is considered.

6. Method according to one of claims 1 to 5, wherein the experimental lens measurement is obtained by illuminating the lens with an incident light (2), wherein, in the first measurement condition, the incident light (2) has a first wavelength, and, in the second measurement condition, the incident light (2) has a second wavelength or a range of wavelengths being different from the first wavelength.

7. Method for conversion of a measurement of a lens (1) comprising the following steps:

receiving an experimental lens measurement (EXP) of the lens (1) from a light measurement of the lens (1);
determining from the experimental lens measurement (EXP) a digital lens model representing the lens (1) (S1);
determining, based on the digital lens model, a converted digital lens measurement (SIM) representing a converted lens measurement of the lens (1) (S2);
determining a measurement result (CON) for the lens (1) by combining the experimental lens measurement (EXP) with the converted digital lens measurement (SIM) (S3)
**characterized in that**
the experimental lens measurement (EXP) comprises an experimental parameter tuple comprising a first experimental parameter (ri) and a second experimental parameter ($\theta$), wherein the converted digital lens measurement (SIM) comprises a digital parameter (ro) being different from the first experimental parameter (ri), wherein the measurement result is based on a measurement parameter tuple comprising the digital parameter (ro) and the second experimental parameter ($\theta$).

8. Method according to the previous claim, wherein the first experimental parameter (ri) is a position of the incident light on the side of the lens (1) of the incident light, wherein the second experimental parameter ($\theta$) is the angle of the exit light on the surface of the lens (1) of the exit light (3), wherein the digital parameter (ro) is a position of the exit light (3) on the side of the lens (1) of the exit light (3).

9. Method according to one of claims 1 to 8, wherein the step of determining from the experimental lens measurement (EXP) the digital lens model representing the lens (1) (S1) comprises the following steps:

receiving at least one parameter of the lens (1); and
estimating the digital lens model based on the at least one parameter received and the at least one experimental first lens measurement (EXP1).

10. Method according to one of claims 1 to 9, wherein the digital lens model is determined/estimated based on an iterative parameter optimization procedure with a plurality of iterative steps, wherein in each step:

a new set of parameter values of this iterative step of the lens (1) is determined;
a digital lens model of this iterative step based on the new set of parameter values is determined;

a digital lens measurement of this iterative step is determined by a ray tracing simulation of the digital lens model of this iterative step; and

the digital lens measurement of this iterative step is compared with the experimental first lens measurement.

11. Method according to one of claims 1 to 10, wherein the converted digital lens measurement (SIM) is determined by a ray tracing simulation of the converted digital lens model or the digital lens model wherein the converted digital lens measurement (SIM) is determined by a ray tracing simulation of the converted digital lens model or the digital lens model.

12. Method according to one of claims 1 to 11 comprising the further steps of:

Illuminating the lens (1) with an incident light (2) interacting with the lens (1) and creating an exit light (3) caused by the interaction of the incident light (2) with the lens (1); and
measuring the exit light (3) to obtain the experimental lens measurement (EXP).

13. Computer program for conversion of a measurement of a lens (1) storing a number of instructions configured, when executed on a processing means, to perform the steps of the method according to one of the claims 1 to 11.

14. Device for conversion of a measurement of a lens (1) comprising:

a receiving means for receiving an experimental lens measurement (EXP) of the lens (1) from a light measurement of the lens (1);
a lens model estimator (11) for determining from the experimental lens measurement (EXP) a digital lens model representing the lens (1);
a measurement simulator (12) determining, based on the digital lens model, a converted digital lens measurement (SIM; SIM1, SIM2) representing a converted lens measurement of the lens (1);
a combiner (13) for determining a measurement result (CON) for the lens (1) by combining the experimental lens measurement (EXP) with the converted digital lens measurement (SIM, SIM2);
**characterized in that**

either the experimental lens measurement (EXP) represents a light measurement of the lens (1) in a first measurement condition, and the converted digital lens measurement (SIM2) represents a lens measurement of the lens (1) in a second measurement condition,
or the experimental lens measurement (EXP) comprises an experimental parameter tuple comprising a first experimental parameter (ri) and a second experimental parameter ($\theta$), wherein the converted digital lens measurement (SIM) comprises a digital parameter (ro) being different from the first experimental parameter (ri).

15. A system comprising:

a lens measurer (20) configured to measure the exit light (3) of a lens (1) the lens mapper comprising a light sensor (21) for sensing said exit light (3) to measure an experimental lens measurement (EXP); and
a device (10) according to the previous claim receiving the experimental lens measurement (EXP1) of the light sensor (21) and outputting the measurement result (CON).

**Patentansprüche**

1. Verfahren zum Umwandeln einer Messung einer Linse (1), das die folgenden Schritte umfasst:

Empfangen einer experimentellen Linsenmessung (EXP) der Linse (1) aus einer Lichtmessung der Linse (1);
Bestimmen aus der experimentellen Linsenmessung (EXP) eines digitalen Linsenmodells, das die Linse (1) darstellt (S1);
Bestimmen auf Grundlage des digitalen Linsenmodells eines umgewandelten digitalen Linsenmodells, das die Linse (1) in einem zweiten Messzustand darstellt (S21);
Bestimmen auf Grundlage des umgewandelten digitalen Linsenmodells, einer umgewandelten digitalen Linsenmessung (SIM2), die eine Linsenmessung der Linse (1) in dem zweiten Messzustand darstellt (S23);
**gekennzeichnet durch**

Bestimmen auf Grundlage des digitalen Linsenmodells, einer digitalen Linsenmessung (SIM1), die eine Linsenmessung der Linse (1) in dem ersten Messzustand darstellt (S22);

Bestimmen einer Umwandlungskorrektur (COR) für die Umwandlung von dem ersten Messzustand in den zweiten Messzustand auf Grundlage von zwei der digitalen Linsenmessung (SIM1), der umgewandelten digitalen Linsenmessung (SIM2) und der experimentellen Linsenmessung (EXP) (S31);

Bestimmen des Messergebnisses (CON) für die Linse (1) in dem zweiten Messzustand (S32).

2. Verfahren nach Anspruch 1, wobei die Umwandlungskorrektur (COR) ein Umwandlungskorrekturfaktor ist, der durch das Verhältnis oder eine Funktion des Verhältnisses der zwei der digitalen Linsenmessung (SIM1), der umgewandelten digitalen Linsenmessung (SIM2) und der experimentellen Linsenmessung (EXP) erhalten wird.

3. Verfahren nach Anspruch 1, wobei die Umwandlungskorrektur (COR) ein Umwandlungskorrekturterm ist, der durch die Differenz oder eine Funktion der Differenz der zwei der digitalen Linsenmessung (SIM1), der umgewandelten digitalen Linsenmessung (SIM2) und der experimentellen Linsenmessung (EXP) erhalten wird.

4. Verfahren nach einem der Ansprüche 1 bis 3, wobei entweder

in dem ersten Messzustand die Linse (1) in einem Fluid angeordnet ist und in dem zweiten Messzustand die Linse (1) in einem Gas angeordnet ist; oder

in dem ersten Messzustand die Linse (1) in einem Gas angeordnet ist und in dem zweiten Messzustand die Linse (1) in einem Fluid angeordnet ist.

5. Verfahren nach einem der Ansprüche 1 bis 4, wobei in dem ersten Messzustand der Einfluss des Hornhautmodells nicht berücksichtigt wird und in dem zweiten Messzustand der Einfluss des Hornhautmodells berücksichtigt wird.

6. Verfahren nach einem der Ansprüche 1 bis 5, wobei die experimentelle Linsenmessung durch Beleuchten der Linse mit einem einfallenden Licht (2) erhalten wird, wobei in dem ersten Messzustand das einfallende Licht (2) eine erste Wellenlänge aufweist und in dem zweiten Messzustand das einfallende Licht (2) eine zweite Wellenlänge oder einen Bereich von Wellenlängen aufweist, der sich von der ersten Wellenlänge unterscheidet.

7. Verfahren zum Umwandeln einer Messung einer Linse (1), das die folgenden Schritte umfasst:

Empfangen einer experimentellen Linsenmessung (EXP) der Linse (1) aus einer Lichtmessung der Linse (1);

Bestimmen aus der experimentellen Linsenmessung (EXP) eines digitalen Linsenmodells, das die Linse (1) darstellt (S1);

Bestimmen auf Grundlage des digitalen Linsenmodells einer umgewandelten digitalen Linsenmessung (SIM), die eine umgewandelte Linsenmessung der Linse (1) darstellt (S2);

Bestimmen eines Messergebnisses (CON) für die Linse (1) durch Kombinieren der experimentellen Linsenmessung (EXP) mit der umgewandelten digitalen Linsenmessung (SIM) (S3);

**dadurch gekennzeichnet, dass**

die experimentelle Linsenmessung (EXP) ein experimentelles Parametertupel umfasst, das einen ersten experimentellen Parameter (ri) und einen zweiten experimentellen Parameter (θ) umfasst, wobei die umgewandelte digitale Linsenmessung (SIM) einen digitalen Parameter (ro) umfasst, der sich von dem ersten experimentellen Parameter (ri) unterscheidet, wobei das Messergebnis auf einem Messparametertupel basiert, das den digitalen Parameter (ro) und den zweiten experimentellen Parameter (θ) umfasst.

8. Verfahren nach dem vorhergehenden Anspruch, wobei der erste experimentelle Parameter (ri) eine Position des einfallenden Lichts auf der Seite der Linse (1) des einfallenden Lichts ist, wobei der zweite experimentelle Parameter (θ) der Winkel des austretenden Lichts auf der Oberfläche der Linse (1) des austretenden Lichts (3) ist, wobei der digitale Parameter (ro) eine Position des austretenden Lichts (3) auf der Seite der Linse (1) des austretenden Lichts (3) ist.

9. Verfahren nach einem der Ansprüche 1 bis 8, wobei der Schritt des Bestimmens aus der experimentellen Linsenmessung (EXP) des Linsenmodells (S1), das die Linse (1) darstellt, die folgenden Schritte umfasst:

Empfangen wenigstens eines Parameters der Linse (1); und

Schätzen des digitalen Linsenmodells auf Grundlage des wenigstens einen empfangenen Parameters und der wenigstens einen experimentellen ersten Linsenmessung (EXP1).

**10.** Verfahren nach einem der Ansprüche 1 bis 9, wobei das digitale Linsenmodell auf Grundlage eines iterativen Parameteroptimierungsvorgangs mit einer Mehrzahl von Iterationsschritten bestimmt/geschätzt wird, wobei in jedem Schritt

ein neuer Satz von Parameterwerten dieses Iterationsschrittes der Linse (1) bestimmt wird;
ein digitales Linsenmodell dieses Iterationsschrittes auf Grundlage des neuen Satzes von Parameterwerten bestimmt wird;
eine digitale Linsenmessung dieses Iterationsschritts durch eine Strahlenverfolgungssimulation des digitalen Linsenmodells dieses Iterationsschritts bestimmt wird; und
die digitale Linsenmessung dieses Iterationsschritts mit der experimentellen ersten Linsenmessung verglichen wird.

**11.** Verfahren nach einem der Ansprüche 1 bis 10, wobei die umgewandelte digitale Linsenmessung (SIM) durch eine Strahlenverfolgungssimulation des umgewandelten digitalen Linsenmodells oder des digitalen Linsenmodells bestimmt wird, wobei die umgewandelte digitale Linsenmessung (SIM) durch eine Strahlenverfolgungssimulation des umgewandelten digitalen Linsenmodells oder des digitalen Linsenmodells bestimmt wird.

**12.** Verfahren nach einem der Ansprüche 1 bis 11, umfassend die weiteren Schritte:

Beleuchten der Linse (1) mit einem einfallenden Licht (2), das mit der Linse (1) wechselwirkt, und Erzeugen eines austretenden Lichts (3), das durch die Wechselwirkung des einfallenden Lichts (2) mit der Linse (1) verursacht wird; und
Messen des austretenden Lichts (3), um die experimentelle Linsenmessung (EXP) zu erhalten.

**13.** Computerprogramm zum Umwandeln einer Messung einer Linse (1), das eine Anzahl von Anweisungen speichert, die dazu konfiguriert sind, wenn sie auf einem Verarbeitungsmittel ausgeführt werden, die Schritte des Verfahrens nach einem der Ansprüche 1 bis 11 durchzuführen.

**14.** Vorrichtung zum Umwandeln einer Messung einer Linse (1), umfassend:

ein Empfangsmittel zum Empfangen einer experimentellen Linsenmessung (EXP) der Linse (1) aus einer Lichtmessung der Linse (1);
einen Linsenmodellschätzer (11) zum Bestimmen aus der experimentellen Linsenmessung (EXP) eines digitalen Linsenmodells, das die Linse (1) darstellt;
einen Messsimulator (12), der auf Grundlage des digitalen Linsenmodells eine umgewandelte digitale Linsenmessung (SIM; SIM1, SIM2) bestimmt, die eine umgewandelte Linsenmessung der Linse (1) darstellt;
einen Kombinierer (13) zum Bestimmen eines Messergebnisses (CON) für die Linse (1) durch Kombinieren der experimentellen Linsenmessung (EXP) mit der umgewandelten digitalen Linsenmessung (SIM, SIM2);
**dadurch gekennzeichnet, dass**

entweder die experimentelle Linsenmessung (EXP) eine Lichtmessung der Linse (1) in einem ersten Messzustand darstellt und die umgewandelte digitale Linsenmessung (SIM2) eine Linsenmessung der Linse (1) in einem zweiten Messzustand darstellt,
oder die experimentelle Linsenmessung (EXP) ein experimentelles Parametertupel umfasst, das einen ersten experimentellen Parameter (ri) und einen zweiten experimentellen Parameter ($\theta$) umfasst, wobei die umgewandelte digitale Linsenmessung (SIM) einen digitalen Parameter (ro) umfasst, der sich von dem ersten experimentellen Parameter (ri) unterscheidet.

**15.** System, das Folgendes umfasst:

ein Linsenmessgerät (20), das dazu konfiguriert ist, das austretende Licht (3) einer Linse (1) zu messen, wobei das Linsenmessgerät einen Lichtsensor (21) zum Erfassen des austretenden Lichts (3) umfasst, um eine experimentelle Linsenmessung (EXP) zu messen; und
eine Vorrichtung (10) nach dem vorhergehenden Anspruch, die die experimentelle Linsenmessung (EXP1) des Lichtsensors (21) empfängt und das Messergebnis (CON) ausgibt.

**Revendications**

1. Procédé de conversion d'une mesure d'une lentille (1) comprenant les étapes suivantes :

   réception d'une mesure expérimentale (EXP) de lentille de la lentille (1) à partir d'une mesure de lumière de la lentille (1) ;
   détermination, à partir de la mesure expérimentale (EXP) de lentille, d'un modèle numérique de lentille représentant la lentille (1) (S1) ;
   détermination, sur la base du modèle numérique de lentille, d'un modèle numérique converti de lentille représentant la lentille (1) dans une seconde condition (S21) de mesure ;
   détermination, sur la base du modèle numérique converti de lentille, d'une mesure (SIM2) numérique convertie de lentille représentant une mesure de lentille de la lentille (1) dans la seconde condition (S23) de mesure ;
   caractérisé en
   la détermination, sur la base du modèle numérique de lentille, d'une mesure (SIM1) numérique de lentille représentant une mesure de lentille de la lentille (1) dans la première condition (S22) de mesure ;
   la détermination d'une correction (COR) de conversion pour la conversion de la première condition de mesure à la seconde condition de mesure sur la base de deux de la mesure (SIM1) numérique de lentille, de la mesure (SIM2) numérique convertie de lentille et de la mesure expérimentale (EXP) de lentille (S31) ;
   la détermination du résultat (CON) de mesure pour la lentille (1) dans la seconde condition de mesure (S32).

2. Procédé selon la revendication 1, dans lequel la correction (COR) de conversion est un facteur de correction de conversion obtenu par le rapport ou une fonction du rapport des deux de la mesure (SIM1) numérique de lentille, de la mesure (SIM2) numérique convertie de lentille et de la mesure expérimentale (EXP) de lentille.

3. Procédé selon la revendication 1, dans lequel la correction (COR) de conversion est un terme de correction de conversion obtenu par la différence ou une fonction de la différence des deux de la mesure (SIM1) numérique de lentille, de la mesure (SIM2) numérique convertie de lentille et de la mesure expérimentale (EXP) de lentille.

4. Procédé selon l'une des revendications 1 à 3, dans lequel soit

   dans la première condition de mesure, la lentille (1) est agencée dans un fluide, et dans la seconde condition de mesure, la lentille (1) est agencée dans un gaz ; soit
   dans la première condition de mesure, la lentille (1) est agencée dans un gaz, et dans la seconde condition de mesure, la lentille (1) est agencée dans un fluide.

5. Procédé selon l'une des revendications 1 à 4, dans lequel dans la première condition de mesure, l'influence du modèle de cornée n'est pas considérée, et dans la seconde condition de mesure, l'influence du modèle de cornée est considérée.

6. Procédé selon l'une des revendications 1 à 5, dans lequel la mesure expérimentale de lentille est obtenue par éclairage de la lentille avec une lumière incidente (2), dans lequel, dans la première condition de mesure, la lumière incidente (2) présente une première longueur d'onde, et, dans la seconde condition de mesure, la lumière incidente (2) présente une seconde longueur d'onde ou une plage de longueurs d'onde étant différente de la première longueur d'onde.

7. Procédé de conversion d'une mesure d'une lentille (1) comprenant les étapes suivantes :

   réception d'une mesure expérimentale (EXP) de lentille de la lentille (1) à partir d'une mesure de lumière de la lentille (1) ;
   détermination, à partir de la mesure expérimentale (EXP) de lentille, d'un modèle numérique de lentille représentant la lentille (1) (S1) ;
   détermination, sur la base du modèle numérique de lentille, d'une mesure (SIM) numérique convertie de lentille représentant une mesure convertie de lentille de la lentille (1) (S2) ;
   détermination d'un résultat (CON) de mesure pour la lentille (1) en combinant la mesure expérimentale (EXP) de lentille avec la mesure (SIM) numérique convertie de lentille (S3)
   **caractérisé en ce que**
   la mesure expérimentale (EXP) de lentille comprend un uplet de paramètre expérimental comprenant un premier paramètre expérimental (ri) et un second paramètre expérimental (θ), dans lequel la mesure (SIM) numérique convertie de lentille comprend un paramètre numérique (ro) étant différent du premier paramètre expérimental (ri), dans lequel le résultat de mesure est basé sur un uplet de paramètre de mesure comprenant le paramètre numérique (ro) et le second paramètre expérimental (θ).

8. Procédé selon la revendication précédente, dans lequel le premier paramètre expérimental (ri) est une position de la lumière incidente sur le côté de la lentille (1) de la lumière incidente, dans lequel le second paramètre expérimental (θ) est l'angle de la lumière de sortie sur la surface de la lentille (1) de la lumière de sortie (3), dans lequel le paramètre numérique (ro) est une position de la lumière de sortie (3) sur le côté de la lentille (1) de la lumière de sortie (3).

9. Procédé selon l'une des revendications 1 à 8, dans lequel l'étape de détermination, à partir de la mesure expérimentale (EXP) de lentille, du modèle numérique de lentille représentant la lentille (1) (S1) comprend les étapes suivantes :

réception d'au moins un paramètre de la lentille (1) ; et
estimation du modèle numérique de lentille sur la base de l'au moins un paramètre reçu et de l'au moins une première mesure expérimentale (EXP1) de lentille.

10. Procédé selon l'une des revendications 1 à 9, dans lequel le modèle numérique de lentille est déterminé/estimé sur la base d'une procédure d'optimisation itérative de paramètre avec une pluralité d'étapes itératives, dans lequel dans chaque étape :

un nouvel ensemble de valeurs de paramètre de cette étape itérative de la lentille (1) est déterminé ;
un modèle numérique de lentille de cette étape itérative basé sur le nouvel ensemble de valeurs de paramètre est déterminé ;
une mesure numérique de lentille de cette étape itérative est déterminée par une simulation de lancer de rayon du modèle numérique de lentille de cette étape itérative ; et
la mesure numérique de lentille de cette étape itérative est comparée à la première mesure expérimentale de lentille.

11. Procédé selon l'une des revendications 1 à 10, dans lequel la mesure (SIM) numérique convertie de lentille est déterminée par une simulation de lancer de rayon du modèle numérique converti de lentille ou du modèle numérique de lentille dans lequel la mesure (SIM) numérique convertie de lentille est déterminée par une simulation de lancer de rayon du modèle numérique converti de lentille ou du modèle numérique de lentille.

12. Procédé selon l'une des revendications 1 à 11 comprenant les étapes supplémentaires de :

éclairage de la lentille (1) avec une lumière incidente (2) interagissant avec la lentille (1) et créant une lumière de sortie (3) causée par l'interaction de la lumière incidente (2) avec la lentille (1) ; et
mesure de la lumière de sortie (3) pour obtenir la mesure expérimentale (EXP) de lentille.

13. Programme informatique de conversion d'une mesure d'une lentille (1) stockant un certain nombre d'instructions configuré, lorsqu'il est exécuté sur un moyen de traitement, pour effectuer les étapes du procédé selon l'une revendications 1 à 11 précédentes.

14. Dispositif de conversion d'une mesure d'une lentille (1) comprenant :

un moyen de réception pour la réception d'une mesure expérimentale (EXP) de lentille de la lentille (1) à partir d'une mesure de lumière de la lentille (1) ;
un estimateur (11) de modèle de lentille pour déterminer, à partir de la mesure expérimentale (EXP) de lentille, un modèle numérique de lentille représentant la lentille (1) ;
un simulateur (12) de mesure déterminant, sur la base du modèle numérique de lentille, une mesure (SIM; SIM1, SIM2) numérique convertie de lentille représentant une mesure convertie de lentille de la lentille (1) ;
un combinateur (13) pour déterminer un résultat (CON) de mesure pour la lentille (1) en combinant la mesure expérimentale (EXP) de lentille avec la mesure (SIM, SIM2) numérique convertie de lentille ;
**caractérisé en ce que**

soit la mesure expérimentale (EXP) de lentille représente une mesure de lumière de la lentille (1) dans une première condition de mesure, et la mesure (SIM2) numérique convertie de lentille représente une mesure de lentille de la lentille (1) dans une seconde condition de mesure,
soit la mesure expérimentale (EXP) de lentille comprend un uplet de paramètre expérimental comprenant un premier paramètre expérimental (ri) et un second paramètre expérimental ($\theta$), dans lequel la mesure (SIM) numérique convertie de lentille comprend un paramètre numérique (ro) étant différent du premier paramètre expérimental (ri).

15. Système comprenant :

un appareil (20) de mesure de lentille configuré pour mesurer la lumière de sortie (3) d'une lentille (1), le mappeur de lentille comprenant un capteur (21) de lumière pour détecter ladite lumière de sortie (3) pour mesurer une mesure expérimentale (EXP) de lentille ; et
un dispositif (10) selon la revendication précédente recevant la mesure expérimentale (EXP1) de lentille du capteur (21) de lumière et délivrant en sortie le résultat (CON) de mesure.

**Fig. 1** Prior Art

**Fig. 2** Prior Art

**Fig. 3** Prior Art

**Fig. 4** Prior Art

EXP

Estimate 1st lens
model S1

Calculate result
S32

CON

Estimate
2nd lens
model S21

Simulate first
measurement
S22

SIM1

COR

Simulate second
measurement
S23

SIM2

Calculate
Conversion
Correction S31

S2

S10

S3

**Fig. 5**

Measure Lens S20

F1

1

EXP

Convert
measurement
S10

CON

Determine lens
parameter S30

**Fig. 6**

**Fig. 7**

**Fig. 8**

**Fig. 9**

EXP

Estimate lens
model S1

Simulate
converted
measurement S2

SIM

Combine
measurements
S3

CON

S10

**Fig. 10**

EXP

lens model
estimator 11

measurement
simulator 12

SIM

Combiner 13

CON

10

**Fig. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016209720

**Non-patent literature cited in the description**

- **CAMPBELL C.** Converting wet cell measured soft lens power to vertex power in air. *Int Contact Lens Clin.,* 1984, vol. 11, 168-71